Europäisches Patentamt

European Patent Office

Office européen des brevets

(11) Publication number: **0 416 782 A1**

# EUROPEAN PATENT APPLICATION

(21) Application number: 90309257.5

(22) Date of filing: 23.08.90

(51) Int. Cl.⁵: **A23L 1/325**

(30) Priority: 01.09.89 US 402835

(43) Date of publication of application:
**13.03.91 Bulletin 91/11**

(84) Designated Contracting States:
**DE FR GB**

(71) Applicant: **ICICLE SEAFOODS, INC.**
**4019-21st Avenue West**
**Seattle, WA 98199(US)**

(72) Inventor: **Barr, James E.**
**20943 N.E. 77th Street**
**Redmond, Washington 98053(US)**
Inventor: **Wright, William Edward**
**5917 Longdin Road**
**Ferndale, Washington 98248(US)**

(74) Representative: **Sheard, Andrew Gregory et al**
**Kilburn & Strode 30, John Street**
**London WC1N 2DD(GB)**

(54) Method for producing an imitation crabmeat product.

(57) Extruded style chunk imitation crabmeat products are produced by extruding a mixture of filaments and a binder material. The filaments are provided by extruding a thin sheet of surimi onto a conveyor belt that carries the sheet through a cooker oven. The cooked sheet is then partially or completely slit to form filaments that are mixed with a binder material prior to extrusion into the final product size and shape.

EP 0 416 782 A1

# METHOD FOR PRODUCING AN IMITATION CRABMEAT PRODUCT

The present invention relates to imitation crabmeat products produced from other seafoods such as pollack or hake and, more particularly, to a method of producing an extruded style imitation crabmeat product from such seafoods.

Imitation crabmeat products produced from other seafood products, such as pollack and hake have found widespread acceptance by consumers, who because of the rising cost of real crabmeat have been increasingly looking for palatable, less expensive substitutes.

In the past, imitation crabmeat products have been produced from a seafood product known as surimi. The production of surimi involves removing the head and internal organs of fish having white meat, such as Alaskan pollack, hoki, mackerel, blue whiting, herring, grouper and menhaden. The skin and bones are also removed from the fish to separate the fish meat, which is then further washed with a large amount of water. Excessive water is then removed and antidenaturants, such as sorbitol or polyphosphate are added to the washed minced meat, which is then frozen to provide blocks of surimi. The surimi can be produced on factory ships on the high seas or at land plants near fishing grounds and then transferred to analogue plants worldwide. After thawing, the surimi can be ground and mixed together with salt, sugar, other seasonings and additives for use as a starting material for the production of imitation crabmeat.

One type of imitation crabmeat product is known as an extruded style chunk product that provides a product having a fibrous texture. Tie fibers in the extruded style chunk product are generally held together by an edible paste or binder material.

One process for producing the extruded style chunk product involves extruding thawed and ground surimi into large blocks. The large blocks are then refrigerated on racks for about 24 hours to allow the blocks of surimi to set up. Thereafter, the blocks of surimi are heat set or coagulated by steaming them for up to two hours followed by cooling. The cooled blocks are then shredded into filaments that make up a portion of the final extruded style chunk product. Normally, it takes about one and one-half to about two days using existing process technology to convert frozen surimi to cooked, shredded filaments. The filaments are then mixed with an edible paste or binder material such as the ground surimi that is extruded into blocks prior to refrigeration. The paste serves as a binder to hold the individual filaments together. The paste and filament mixture is then extruded into a final product size and shape. Colored edible paste is applied to the exterior of the extruded product during this final extrusion step. The extruded and colored product is then steamed again to heat set and cook the previously uncooked edible paste that serves as a binder material and the previously uncooked colored edible paste. The product is then cooled before being chopped into marketable sizes and packaged.

Another kind of imitation crabmeat product is a filament style chunk product. The filament style chunk product differs from the extruded style chunk product in that it does not normally include an edible paste as a binder material. In contrast to the extruded style chunk-product that has the filaments randomly oriented within the product, the filament style chunk product has filaments that are parallel with the length of the imitation crabmeat product. Many consumers believe the filament style chunk product with its stringy texture more closely resembles real crabmeat than does the extruded style chunk product.

The filament style chunk product can be produced by a process that involves much less time from start to finish than conventional processes for making extruded style chunk product; however, processes for making the filament style chunk product normally include more process steps than previous processes for making extruded style chunk product. For instance, one process for making filament style chunk product involves forming a ribbon or thin sheet from a paste of ground surimi. The ribbon is then cooked before narrow slits are introduced into one side of the ribbon. The ribbon is then rolled over itself at an angle to form a rope. Coloring is applied to the rope as it is bundled and bound by wrapping it in a plastic film. The bundled rope is then cut into appropriately sized lengths prior to heating to set the previously uncooked edible colored paste. The film on the cooked rope is then removed manually after the rope is cooled. This rope is then chopped and packaged for storage prior to distribution.

Although consumers have accepted the filament style chunk product, many consumers still prefer the extruded style chunk product. Because of the length of time involved in producing an extruded style chunk product, manufacturers have had to accept the higher cost of lengthier conventional processes. Accordingly, it is desirable to produce an extruded style chunk product by a process that is less time consuming than prior methods used to make extruded style chunk product, and involves fewer steps than certain processes that have been used for producing the filament style chunk product.

The present invention is a quick and labor efficient process for producing extruded style chunk imitation crabmeat products. A method carried out in accordance with the present invention can produce an extruded style chunk crabmeat product from ground surimi in about 0.5 hours. The product produced has a texture and appearance that is desirable to consumers who prefer extruded style chunk imitation crabmeat products. The method carried out in accordance with the present invention can be carried out on a batch or semibatch basis. The process can be designed preferably for operation on a continuous basis.

The present invention is a process for providing preformed filaments of ground surimi for molding into an extruded style imitation crabmeat product. A method carried out in accordance with the present invention involves the steps of:

(1) forming a thin sheet from ground surimi having a paste-like consistency;

(2) setting the ground surimi in the thin sheet;

(3) introducing slits into the sheet of ground surimi that pass at least partially through the sheet;

(4) separating the slit sheet of ground surimi along the slits to provide a plurality of individual filaments of ground surimi; and

(5) mixing the individual filaments with a binder material. The mixture of individual filaments and binder material can then be extruded into a final product size and shape and coagulated by exposing it to heat.

A method carried out in accordance with the present invention is quick and can be operated on a continuous basis. The process is labor and energy efficient and provides a product that will satisfy consumers who desire extruded style chunk imitation crabmeat products at a reasonable price.

A better understanding of the present invention can be derived by reading the ensuing specification in conjunction with the accompanying drawings wherein:

FIGURE 1 is a schematic flow diagram of a method carried out in accordance with the present invention;

FIGURE 2 is a schematic flow diagram of another method carried out in accordance with the present invention;

FIGURE 3 is an isometric view with a portion cut away of a conventional filament style chunk product; and,

FIGURE 4 is an isometric view with a portion cut away of an extruded style chunk product produced by a method carried out in accordance with the present invention.

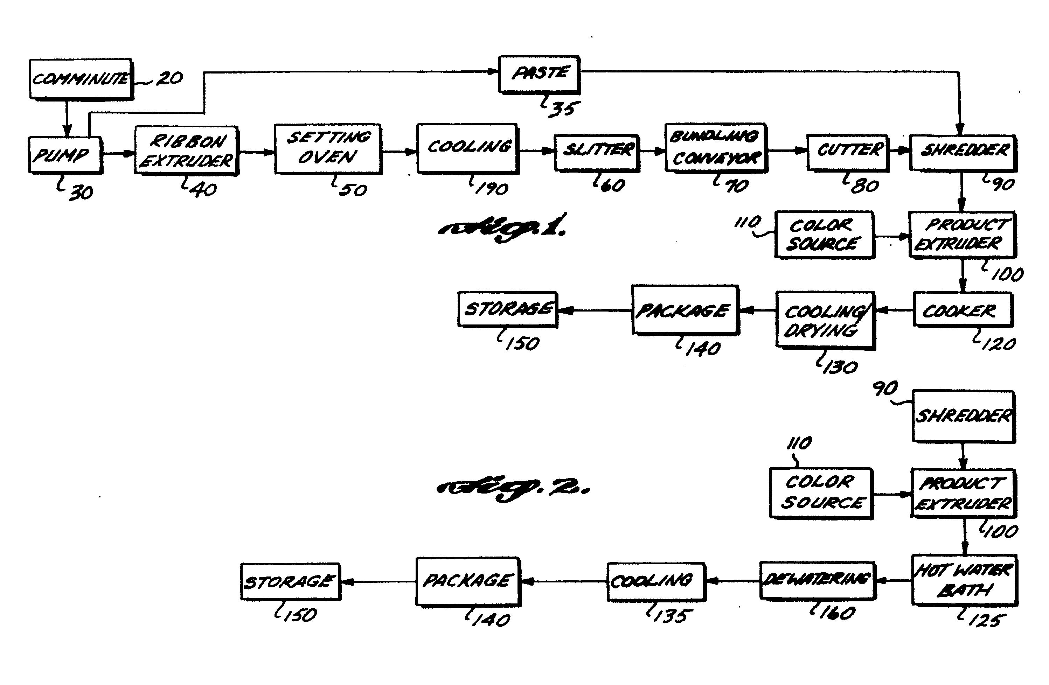

Referring to FIGURE 1, a method carried out in accordance with the present invention involves preparation of a surimi paste by thawing and comminuting frozen blocks of surimi using a food cutter. During the comminuting step generally represented by block 20, seasonings, and other additives are mixed with the surimi. The ground surimi having a paste-like consistency is then pumped by pump 30 and divided into two streams: (1) a paste stream generally indicated by block 35; and, (2) a stream directed to a ribbon extruder generally indicated by reference numeral 40. Ribbon extruder 40 extrudes the paste-like surimi into a thin sheet. The extruded sheet is deposited onto a conveyor belt that passes through a setting oven generally indicated by reference numeral 50. The sheet of surimi is exposed to an elevated temperature in setting oven 50 that serves to coagulate or heat set the extruded sheet.

From setting oven 50, the coagulated sheet of surimi is cooled at cooling station 190 and then passes through a slitter 60 that introduces closely spaced longitudinal slits into at least one side of the sheet that pass at least partially through the sheet of ground surimi. Although not required, it is preferred that the partially slit sheet of ground surimi be rolled across itself at an angle from the direction that the sheet is traveling on a bundling conveyor 70 to form a rope that is then cut into predetermined lengths by cutter 80. From cutter 80, the rope is introduced into shredder 90 that separates the rope into individual filaments that are initially defined in the rope between the slits that were introduced by slitter 60. It is also possible for the slit sheet of cooked surimi exiting slitter 60 to be deposited directly into shredder 90 for shredding rather than rolling it into a rope on bundling conveyor 70. Rolling it into a rope is preferred for handling convenience. Uncooked ground surimi from line 35 is also introduced into the shredder for mixing with the filaments of the cooked surimi.

The mixture of filaments and uncooked ground surimi from shredder 90 is then introduced into product extruder 100 that also receives coloring from color source 110. The product extruder extrudes the mixture of filaments and paste into a final product size and applies the coloring to the exterior of the extruded product during the extrusion step. The colored and extruded product is then cooked in cooker 120. After the colored and extruded product is cooked in cooker 120, it passes to a drying and cooling zone generally indicated by reference numeral 130 before being packaged at 140 for storage at 150.

Each of the individual steps briefly described above will now be described in more detail with further reference to FIGURE 1.

The comminuting step generally indicated by reference numeral 20, can be carried out in a conventional type food cutter or batch mixer capable of grinding and thawing the frozen surimi and mixing it with seasonings and other additives. The comminuting step should reduce the frozen surimi to a paste-like substance capable of being extruded into a thin sheet or ribbon. In order to encourage the thawing of the frozen blocks of surimi, the food cutter or batch mixer may include a heating jacket or coil. If an external heat source is applied during the comminuting step, the temperature must not be elevated excessively; otherwise, the surimi will coagulate prematurely. An example of a suitable food cutter/batch mixer is a silent cutter Model No. YF370 available from Yamaguchi, Ltd., Saitama, Japan. The Yamaguchi silent cutter includes an annular shaped bowl that can rotate about a vertical axis in a clockwise direction. The frozen surimi is chopped into a granular size by a set of six sickle shaped knives that rotate about a horizontal axis within the bowl. The knives also serve to mix the other ingredients with the surimi. An agitator that rotates within the annular bowl about a vertical axis provides additional mixing. The ground surimi can then be transferred to a hopper or other feed tank for further processing.

From comminuting step 20, pump 30 directs the stream of ground surimi two different ways. First, a stream is separated off into a separate line forming a paste line generally indicated by reference numeral 35. The ground surimi in paste line 35 will be added to the shredder 90 as described hereinbelow in more detail. The other line out of pump 30 is directed to ribbon extruder 40. The output from pump 30 and the division into the two lines by pump 30 can be controlled by conventional means to continuously provide the desired amounts of binder material to shredder 90 and feed to ribbon extruder 40.

Ribbon extruder 40 receives the stream of paste-like ground surimi from pump 30 and forces it through a thin slit causing a film or sheet of the ground surimi to be formed and deposited onto a conveyor belt traveling at a speed equal to the rate at which the ribbon of surimi is produced. Because of the paste-like consistency of the ground surimi and the controlled speed of the conveyor belt, the sheet is a continuous sheet substantially free of holes or other irregularities. Generally, the ribbon extruder provides a sheet of ground surimi having a thickness ranging from about 1/32 (~0.8 millimeters) to about 1/8 of an inch (~3.2 millimeters). Preferably the thin sheet of ground surimi ranges in thickness from about 1/16 (~1.5 millimeters) to about 1/12 of an inch (~2.0 millimeters). The ribbon extruder can provide an individual sheet having a width generally ranging from about 6.0″(150mm) to 12.0(300mm) although other widths are applicable in the context of the present invention. It is also possible to employ more than one ribbon extruder and provide more than one sheet of ground surimi to setting oven 50. An example of a suitable ribbon extruder for use in a process carried out in accordance with the present invention is available from Ikeuchi Tekkosho, Ltd., Akashi, Japan. The Ikeuchi Tekkosho, Ltd. ribbon extruder includes two plates lying in one plane and two other plates lying in an adjacent parallel plane. The longitudinal side of the first two plates is perpendicular to the longitudinal side of the second set of plates. The four plates can be slid relative to each other to vary the width and thickness of the rectangular gap formed where the plates overlap. Three control valves are used to assure an even flow of ground surimi through the gap.

The extruded sheet of ground surimi is deposited onto an endless conveyor belt traveling at the same speed as the speed with which the ribbon of ground surimi leaves the ribbon extruder. The belt carries the sheet of ground surimi through setting oven 50. For sanitary and heat transfer purposes, it is preferred that the conveyor belt comprise a stainless steel; however, other materials compatible with food processing may be used.

Setting oven 50 serves to coagulate or heat set the thin sheet of ground surimi. Setting oven 50 can be provided with gas-fired heaters, steam heat sources, microwave heat sources and the like. For example, one configuration of heat sources useful in the context of the present invention includes a steam-fed heating section positioned between two gas-fired heating sections. Suitable steam-fed heaters are available from Ikeuchi Tekkosho, Ltd. having a length of about 12.0′(3. 6m) although other lenghts can be used . Suitable gas-fired heating sections are also avaliable from Ikeuchi Tekkesho, Ltd. having respective lenghts of about 13.0′ (3.9m) and 5.0′ (1.5m) although other lenghts can be used. The temperature of the surimi in setting oven 50 should be elevated high enough to coagulate or heat set the surimi in a period of time generally established by the speed at which the sheet passes through the oven and the length of the oven. The temperature of the surimi should not be elevated so high or the period of exposure to heat be so long that a significant amount of moisture is removed from the surimi in the setting oven 50. In the context of a setting oven as described above, operating the first gas fired heater at about 350°F (176°C) is satisfactory to heat set the sheet of surimi when it is travelling through the oven at speeds described below. Providing steam at a temperature of about 195°F (90°C) to the steam-fed heaters. is sufficient to complete the cooking the ground sheet of surimi. The second gas-fired heater is operated at a temperature lower than the temperature of the first gas-fired heater. The primary purpose of the second gas-fired heater is to remove any excess moisture that forms on the surface of the sheet of surimi as it passes through the steam-fed heating section.

The skilled artisan will appreciate that the speed of the conveyor belt will be dependent upon the length of the heating elements in setting oven 50, the operational temperature of setting oven 50, and the desired period of time that the sheet of ground surimi is to be exposed to the heating elements. Generally, when using radiant heat sources, such as gas-fired heaters or steam-fed heaters described above, the temperature of the surimi exiting the setting oven should range between about 145°F-170°F (62°C-77°C) although other temperatures will be applicable in the context of the present invention. Heating the thin sheets of ground surimi to these temperatures has been found satisfactory to coagulate and set the surimi in the thin sheet. For the steam-fed heaters and gas-fired heaters described above in order to heat the sheets of surimi so they exit the oven at a temperature within the range described above a dwell time in the cooker of about 1.0 to 2.5 minutes is generally required.

When employing equipment that coagulates or heat sets the sheets of surimi using microwave technology, the intensity and length of time that the sheet of surimi is exposed to the energy source should be sufficient to coagulate and heat set the sheet so that a degree of rigidity sufficient to allow slits to be introduced into the sheet of ground surimi is provided. As with the radiant heat sources, overcooking of the sheet should be avoided. In addition to the radiant heat sources and the microwave heat sources described above, baths containing hot fluid, such as water or oil, can also be used to cook the ground surimi. From setting oven 50, the cooked sheet of surimi is cooled to about 90°F (32°C) by passing it across a series of parallel horizontal cooling rods generally indicated by reference number 190. The rods can be spaced apart about 150mm and allow ambient air to circulate around the cooked sheet. In addition to cooling, the ambient air also removes water from the surface of the sheet of ground surimi that otherwise causes the sheet to be sticky and prone to clogging the roller/slitter described below. The cooling rods are linked together to form an endless conveyor having a length that is determined primarily by the cooling required. Depending on the available space, two or more cooling conveyors can be placed end to end or in a zig-zag configuration to increase the overall length of the cooling conveyor. Generally, the cooling conveyor will be about 50.0' (15m) long, although other lenghts can be used. In addition, refrigerated air can be used to increase the rate of cooling.

After passing through the cooling section 190, the cooked sheet of ground surimi is passed through roller/slitter 60 that introduces closely spaced longitudinal slits or perforations into the sheet that pass at least partially through the sheet. When the slits that are introduced into the sheet pass partially through the sheet, the entire sheet will still be held together by those portions of the sheet that have not been penetrated by the slitter. The portion of the sheet of ground surimi between the closely spaced slits define the filaments that will eventually be separated by the shredder 90 as described below. These individual filaments, at least in part, provide the final product with an appearance and texture that resembles real crabmeat. The closely spaced slits passing partially through the ground sheet of surimi form lines of weaknesses in the sheet of surimi along which shredder 90 can easily and cleanly separate the sheet into the individual filaments. Alternately, particularly when the slit sheet of surimi is to be introduced directly into the shredder 90, the slits can pass completely through the sheet of ground surimi, thus directly producing the individual filaments from the sheet of cooked surimi paste without the need for separation. A suitable roller/slitter is available from Ikeuchi Tekkosho, Ltd. Ikeuchi roller/slitters include two combs and two parallel sets of concentric, round rollers or plates having 1/64″ (0.4mm) thick concentric spacers between each adjacent plate. It should be understood that larger or smaller spacers can be used depending on the desired spacing between slits. The plates and spacers are mounted on a horizontal shaft that passes through the center of the plates and spacers. Each of the shafts is rotatable and mounted so that the width of the gap between the periphery of the plates is adjustable. By adjusting the spacing between the two sets of plates, the depth of the slits in the ribbon can be varied. The shafts rotate in opposite directions relative to each other so that the ribbon is pushed between the rotating plates and through the gap as the slits are introduced into the ribbon. The combs are positioned underneath the rollers with their tines passing into the space between the plates. The combs serve to scrape the ribbon off of the rollers preventing it from adhering to and wrapping completely around the roller.

Referring to FIGURE 1, in a preferred embodiment, as briefly described above, when the sheet of ground surimi is partially slit by slitter 60, it is preferred to roll the slit sheet over itself on a bundling conveyor 70 to form a rope. A rope can be formed from the sheet of ground surimi by rolling the sheet across itself at an angle from the direction that the sheet is traveling prior to being rolled. The rolling of the sheet of ground surimi can be carried out on a bundling conveyor that includes guides for directing the rope so that the sheet is continuously rolled across itself to form the rope.

The rate at which the sheet is rolled over itself compliments the rate at which the sheet is introduced onto the bundling conveyor from the setting oven so that the rope can be produced continuously. A more detailed description of one method for rolling a sheet of fish paste across itself at an angle to form a rope is found in U.S. Patent No. 4,557,940. A suitable bundling conveyor is available from Ikeuchi Tekkosho, Ltd. and includes an endless rubber conveyor belt having a length of about 2.0ʹ (60mm). It is preferred to operate this conveyor belt at a speed slightly greater than the speed o the ribbon as it exits the roller/slitter. The higher speed helps to maintain tension on the rope as it is formed in the bundling process. The tension keeps the rope tight and prevents holes from forming in the middle of the rope. Generally, the rope must be started by hand rolling the leading corner across itself and feeding the rope onto the bundling conveyor. Rolling the sheet of ground surimi into a rope is preferred for ease of handling purposes. Generally the diameter of the rope will range from about 0.5-1.5ʺ (13mm-40mm). Naturally if the slits that are introduced into the sheet of ground surimi pass completely through the sheet, rolling of the slit sheet into rope would be extremely difficult and it is preferred to deposit the slit sheet directly into shredder 90. After the rope is formed, it can be cut transversely into desired lenghts of about 4ʺ-6ʺ - (100mm-500mm) although other lengths can be used. The rope can be cut by a rope cutter avaliable from Coastline Equipment Inc., Bellingham, Washington. The rope cutter includes a double-edged knife that pivots back and forth at a speed that cuts the continuously moving rope into the preferred lengths. The frequency of the oscillations is variable so that the lengths of the cut rope can be adjusted. In order to center the rope within the arc traversed by the cutter a funnel can be used. As an alternative to the pivoting double edged knife described above, a rotating knife blade could be used to cut the rope.

The particular shredder 90 used in accordance with the present invention will depend upon whether or not the partially slit sheet of ground surimi is introduced directly into the shredder 90, or whether a rope is rolled from the partially slit sheet of ground surimi and then introduced into the shredder 90. When a rope formed from a sheet of ground surimi having closely spaced slits passing partially through the sheet is to be shred, the shredder must not only separate the rope into the individual filaments, but it must also provide good mixing of the filaments with the ground surimi that is introduced into shredder 90 from paste line 35. The shredder will also cut or tear the individual filaments into lengths shorter than the lengths of the filaments that are introduced into the shredder in the form of a rope. A suitable shredder 90 includes a worm box into which the rope and the ground surimi are introduced and a pump for removing the shredded and mixed material from the worm box. The worm box includes two parallel, horizontal stainless steel screws or augers turning in opposite directions. The rope of ground surimi and the ground surimi from paste line 35 are introduced into the worm box at one end of the screws or augers. The longitudinal screws or augers push the rope and the ground surimi to the opposite end of the screws or augers where a horizontal feed roll is positioned in a plane above the augers. The feed roll is positioned perpendicular to the longitudinal axes of the screws or augers and includes a longitudinal cylinder having parallel rows of teeth extending along the length of the cylinder around the periphery of the cylinder. A cross section taken through the feed roll perpendicular to the longitudinal axis of the feed roll provides a profile that resembles a sprocket. Through the combined action of the screws or augers and the feed roll, the shredder serves to break up or separate the rope into the individual filaments, cut the filaments into shorter lengths, and intimately mix these filaments with the ground surimi added from paste line 35. The screws or augers and the feed roll have a speed control that is independent of the speed control for the pump. By controlling the relative difference in the speed of the pump and the speed of the screws, augers, and feed roll the hold time of the materials within the shredder can be controlled and accordingly the degree of shredding and mixing that is achieved in the shredder can be controlled. An example of a commercially available apparatus suitable for use as a continuous shredder in a method carried out in accordance with the present invention is a Doering Pump Feeder available from C. Doering and Sons incorporated, Westmont, Illinois. Naturally, other shredder/mixers can be used in the context of the present invention so long as they provide satisfactory shredding and mixing as described above.

If the slits are cut completely through the ground sheet, the ability of shredder 90 to tear and separate the sheets or rope into the individual filaments defined between the closely spaced slits is not as critical; however, shredder 90 must be capable of thoroughly mixing the individual filaments with the ground surimi added from paste line 35.

As described above, in addition to the cooked surimi that forms the individual filaments, the paste or binder material in line 35 is also introduced into shredder 90 for mixing with the individual filaments. The paste or binder material in line 35 serves to hold the individual filaments together after the mixture is extruded as described below in more detail.

Although the surimi paste is a preferred binder material, other food products compatible with the taste and texture of the final product are useful, for example krill and the like. Because the ground surimi in paste line 35 is uncooked, as described hereinbelow, an additional cooking or coagulating step must be provided to heat set the paste.

Shredder 90 serves to thoroughly mix the individual filaments with the paste to form a mixture that can be extruded or otherwise formed into the final product size and shape. Shredder 90 must be capable of breaking up the cooked surimi into the individual filaments and cutting the filaments into shorter lengths, but the shredding action must not be so rigorous that it begins to grind up the individual filaments to any great degree. Generally, the weight percent of filament material and paste material that is introduced into shredder 90 is on the order of about 70 weight percent filament material and about 30 weight percent paste material. For a process carried out in accordance with the present invention, it generally takes on the order of 10 to 15 minutes for surimi product that is introduced into pump 30 to reach the outlet of shredder 90.

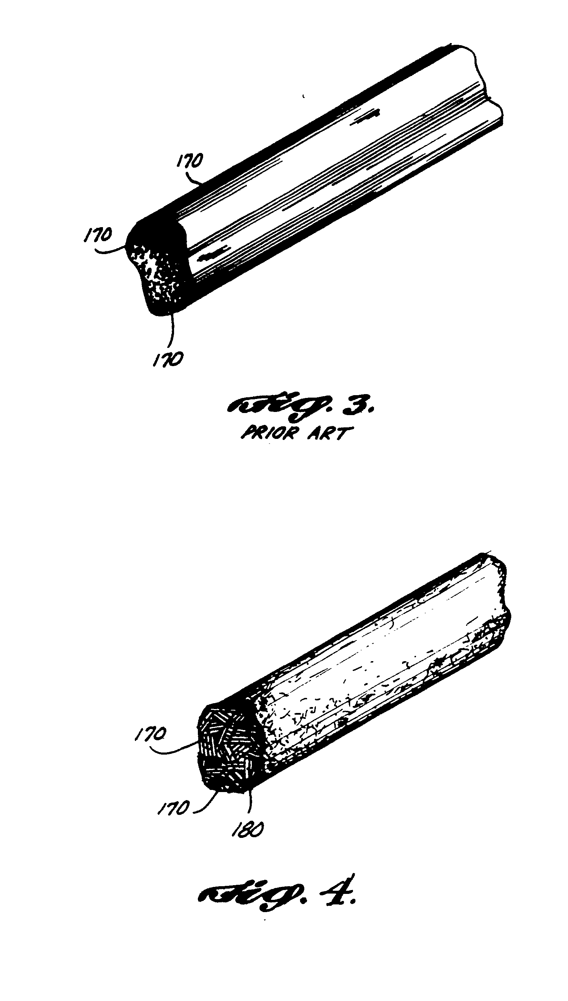

From shredder 90, the mixture of filaments and paste is introduced into a product extruder 100 that extrudes the paste and filament mixture into a final product size and shape. Extruders of this type are available from Ikeuchi Tekkosho, Ltd. The extruder forces the mixture of filaments and paste through an orifice in the extruder head to provide a molded product. The cross-sectional profile of the final product is generally established by the shape of the orifice. The length of the extruded product is controlled by a reciprocating knife blade that cuts through the extruded product as it exits the extruder head normal to the direction in which the filament and paste mixture is forced through the orifice. Generally, for imitation crabmeat products, the extruded product has a diameter of about $0.9''$-$0.75''$ (12.5mm-19mm) and a length of about $0.75''$-$1.0''$ (19mm-25mm) although, other sizes can certainly be produced. Because of the uniform random mixing of the filaments and the paste in shredder 90, the extruded product exiting product extruder 100 has filaments that have no uniform alignment or position. Referring to FIGURE 4, the random orientation of the individual filaments 170 and presence of a binding matrix 180 is characteristic of an extruded style chunk imitation crabmeat product. This configuration provides a mouth feel and appearance that is less stringy than the filament style chunk imitation crabmeat product. In contrast, referring to FIGURE 3, a filament style chunk product has filaments 170 that are parallel with the length of the imitation crabmeat product. In addition, normally the filament style chunk product does not have a paste or binder material interspersed between the interstices of the filaments.

During the extrusion of the product into its final shape and size, color is added to the exterior of the extruded product from color source 110. The coloring that is used on the exterior of the extruded product can comprise a paste of the ground surimi similar to that in line 35 that includes conventional color additives accepted by the food processing industry and regulatory agencies. The colored surimi paste is supplied to the extruder by a pump and a hose that feed a manifold connected to the extruder. The manifold distributes the colored surimi paste to a plurality of vertical holes whose lower ends connect with the orifice through which the filament and binder mixture is extruded. Tees and control valves control the flow of the colored surimi paste into the extruder orifice so that a uniform film of colored surimi paste is applied thereto.

The extruded and colored product is then subjected to cooking conditions again to coagulate or set the previously uncooked binder material and colored surimi paste. Conventional cooking techniques such as depositing the extruded colored product onto a conveyor belt for passing through a cooker oven can be employed; however, such techniques often suffer from the disadvantage of the colored product moving relative to the belt, thus causing the coloring on the product to smear. Also, as the product moves relative to the belt some of the coloring can be transferred to the belt and then picked up by portions of the product that are preferably left uncolored. Preferably, referring to FIGURE 2, the extruded product is deposited into a hot water bath 125 after extrusion. Hot water bath 125 has the advantage over the conveyor belt of not smearing the color during the cooking cycle because the colored product is suspended or floated in the hot water bath rather than supported on the rigid belt surface. Hot water bath 125 may be in the form of a continuously flowing stream of heated water passing through one side of a double pipe heat exchanger. In a double pipe heat exchanger, heat is supplied to the hot water bath from the other side of the double pipe heat exchanger that is carrying water or steam at a temperature higher than the water of the hot water bath. For example, the inner tube carries the product and water carrying the product (product water) away from the extruder and towards the dewatering belt. The outer tube or annulus carries process water used to maintain the temperature of the product water. The flow of the product water and process water can be counter- or co-current, although counter-current is preferred. Preferably, the product water is preheated before entering the double pipe heat exchanger. The preheating can be accomplished by counter-current flow of the product water in a plate and frame heat exchanger or the like. A plate and frame heat exchanger includes a series of parallel plates with process water on one side and product water on the other. The process water can be heated by steam in a shell and tube heat exchanger prior to entering the double pipe heat exchanger. A shell and tube heat exchanger includes a series of U-shaped tubes through which the process water passes. The interstices between the tubes are filled with steam regulated to maintain a process water temperature of about 180° to 210°F (82°-99°C). An example of a suitable double pipe heat exchanger having a length of about 150′ (45m) is avaliable from APV Crepaco Inc., Chicago, Illinois. The APV Crepaco Inc. heat exchanger has an inner tube having a diameter of about 3.0″ (75mm) and an outer tube having a diameter of about 4.0″ - (100mm). Alternatively, the hot water bath can be in the form of a longitudinal open trough carrying heated water. When an open trough is used as the hot water bath, heat is transferred to the hot water by passing the stream of water through a heat exchanger or other heat transfer apparatus connected to a source of steam.

As described in more detail hereinbelow, water that is removed from the hot water bath when the product is removed from the bath is partially replaced by recycling the water that is recovered from the product during the dewatering step. Although the hot water bath can be stagnant or nonflowing, if operation on a continuous basis is desired, it is preferred to use a hot water bath in the form of a continuously flowing stream. Generally, the temperature of the hot water bath will range from about 160°-200°F (71°-93°C), although other temperatures can also be used. The period of time in which the extruded product is allowed to resiae in the hot water bath generally ranges from about 1.0 to about 2.5 minutes for the temperatures described above. After such dwell times the product entering the hot water at about 60°F (150°C) will leave the hot water bath at a temperature ranging between about 160°-190°F (71°-87°C). When the double pipe heat exchanger is used as the hot water bath as described above, the speed or volumetric flow of the heated water through the heat exchanger can be varied in order to provide the desired product temperatures and dwell time.

Another advantage of employing hot water bath 125 is the more efficient energy transfer that is achieved from the water to the product, compared to heat transfer to the product from radiant heat sources such as gas-fired burners.

When the extruded product is cooked in a hot water bath 125, after the cooking cycle is complete, the cooked product is dewatered at step 160 by a gravity or vacuum technique. Gravity dewatering techniques include depositing the wet product onto an endless wire or plastic perforated belt and allowing the water to drain off and air to pass through the product. The speed of the dewatering belt can be varied depending on the production rate. The speed of the belt should be controlled so that a monolayer of product is provided on the belt. Providing a monolayer on the belt permits maximum drainage and evaporation of water from the product. The dewatering belt can be about 6.0′ (1.8m) long although other lengths can be used. The mesh size of the belt depends on the size of the product pieces. The mesh size should not be so large as to allow the smaller pieces of the product to fall through; however, the mesh size should not be so small that the drainage of water through the belt is hindered. Two or more dewatering belts can be provided in succession so that when the product drops from one belt onto another belt, the product will flip over and expose the surface that previously was in contact with the belt. To minimize the formation of free standing water, the perforated belt can be positioned in a nonhorizontal position. To increase the drying rate of the wet product, conventional vacuum drying techniques can be employed. As described above, water that is collected from the product during the dewatering step may be recirculated back to the hot water bath in order to replace some of the water that is removed from the hot water bath when the cooked product is removed. Suitable perforated belts for dewatering the cooked product as described above are available from numerous commercial suppliers.

Still referring to FIGURE 2, the hot product, at a temperature ranging between about 160°-190°F (71°-87°C)is then cooled by dropping it into another open mesh belt similar to the one described for dewatering the product. Cooling air then circulates across or through the belt to reduce the temperature of the product. The cooling air can be ambient air circulating naturally, or forced refrigerated air that will increase the cooling rate. In addition to cooling the hot product, the air cooling serves to remove additional amounts of water from the product left after dewatering step 160. The cooling belt can be about 50.0 feet long, although other lengths can be used. Alternately, the hot product can be cooled by dropping it into a trough of chilled water similar to the trough described above that can be used as the hot water bath. If a cooling bath of water is used to cool the product, dewatering step 160 can be postponed until after the cooling is completed if a single dewatering step removes sufficient amounts of water so that the presence of excess moisture that may be considered undesirable from the end user's standpoint is avoided. Referring additionally to FIGURE 1, after the product is cooled, it is ready for packaging at station 140 and storage at station 150.

The method carried out in accordance with the present invention involves a minimal number of steps and generally takes about 30 to 50 minutes to complete. The method is not labor intensive and does not involve extensive manual handling of the product. The process can be adapted for continuous, batch, or semibatch operation, and produces an extruded style chunk imitation crabmeat product that consumers find desirable.

The following example of a method carried out in accordance with the present invention is intended to illustrate the present invention and not limit its scope.

Example

500lb (227kg) of frozen surimi partially thawed to about 28°F (-2°C) in the form of 2.0" (50mm) thick, 2.0' (600mm) long, and 1.0' (300mm) wide slabs are comminuted by a silent cutter Model No. YF370 avaliable from Yamaguchi, Ltd. 400lb (182kg) of additives including (in order of predominance) water, various starches, egg white, sorbitol, sugar, mirin, wine, salt, natural crab extract, artificial flavour and monosodium glutamate are added to the surimi in the silent cutter. The silent cutter comminutes the frozen surimi into a paste-like mixture having a density of 63.6lbs/ft³ (1019kg/m³) The ground surimi at a temperature of about 45°F (7°C) is transferred to a hopper from which 0.11ft³/minute (0.0031m³/minute) of the paste is pumped to a ribbon extruder avaliable from Ikeuchi Tekkosho, Ltd. The ribbon extruder forces the paste mixture through a slit 1/16" (1.5mm) thick and 10.0" - (25mm) wide to provide a continuous sheet of ground surimi having the same dimensions. 0.05ft³/min (0.0014m³/min) of ground surimi is pumped from the hopper to a paste line. The ground surimi in the paste line is introduced into a shredder as described below.

From the ribbon extruder, the thin sheet of ground surimi is deposited onto a stainless steel conveyor belt travelling at 30.0 feet (9m) per minute through a setting oven having three sections. The first section of the setting oven includes a gas-fired heater avaliable from Ikeuchi Tekkosho, Ltd., having a length of 12.0' (3.6m). The first section of the setter oven is operated at a temperature of about 350°F (176°C). The second section of the setter oven includes a steam-fed heater avaliable from Ikeuchi Tekkosho, Ltd. having a length of 13.0' (3.9m). Steam is fed to the pipes of the second heater from a steam feed box that is maintained at a temperature of 195°F (90°C). The last section of the setting oven includes another gas-fired heater avaliable from Ikeuchi Tekkosho, Ltd. having a length of 5.0' (1.5m). The temperature in the last section of the setting oven is less than the temperature in the firsts section of the setting oven and varies throughout the process depending on the amount of surface moisture that needs to be removed from the sheet of surimi after it. leaves the steam fired heater. The sheet of ground surimi. exiting the setting oven is at a temperature of 150°F (65°C) after taking about 1.0 minute to pass through the setting oven.

The set sheet of ground surimi exits the setting oven and is received by a series of parallel horizontal cooling rods spaced apart about 6.0 inches. The series of rods acts as an endless conveyor and allows ambient air to circulate over and under the hot sheet of ground surimi. The length of the path that the ground sheet of surimi traverses from the first roller to the last roller is 50.0' (15m). When the sheet leaves the last roller, the temperature of the ground surimi is 90°F (32°C). The cooled sheet of ground surimi is then introduced into a roller/slitter, available from Ikeuchi Tekkosho, Ltd. The roller/slitter introduces closely spaced longitudinal slits that pass partially through the set sheet of ground surimi. The centerlines of the slits are 1/64" (0.4mm) apart and the slits are 1/32" (0.8mm) deep.

From the roller slitter, the continuous sheet of ground surimi is deposited onto a bundling conveyor available from Ikeuchi Tekkosho, Ltd. The bundling conveyor transforms the slit sheet of surimi into a continuous rope by rolling the sheet across itself at an angle of 20.0 degrees to the direction the sheet of surimi travels through the roller slitter. The rope has a diameter of 1.0" - (25mm). The bundled rope is then cut into 4.0" - (100mm) lengths by a rope cutter avaliable from Coastline Equipment, Inc. that includes a double edged knife that pivots back and forth across the path of the rope. A funnel is provided to center the rope within the arc through which the knife swings.

The cut portions of rope are then introduced into a Doering Pump Feeder available from C. Doering & Sons, Inc. The previously uncooked ground surimi in the paste line is also added to the pump feeder. The ratio of the weight of the rope and the weight of the previously uncooked ground surimi is 70 weight percent rope and 30 weight percent uncooked paste or binder material. The pump feeder separates the rope along the slits into individual filaments and thoroughly mixes these individual filaments with the added binder material.

From the shredder, the mixture of binder material and surimi filaments is introduced into an extruder including an extruder head with an orifice having a diameter of 5/8" (16mm). Connected to the extruder is a pump and hose carrying colored surimi paste that is to be applied to the exterior of the extruded product. The colored surimi paste is a mixture of previously uncooked ground surimi paste and a coloring additive approved for use with food products. A suitable shredder is available from Ikeuchi Tekkosho, Ltd. A manifold receives the colored surimi paste and distributes the paste to the orifice in the extruder head. The color paste flows through vertical holes whose bottoms connect with the orifice through which the uncolored surimi is extruded. As the colored mixture of binder material and surimi filaments exit the extruder head, a knife positioned at the exit of the extruder head passes through the extruded product in a direction normal to the direction that the mixture of surimi filaments and binder material is forced through the orifice in the extruder head.

The formed product is deposited into a hot water bath in the form of a double tube heat exchanger. The heat exchanger is available from APV Crepaco Inc., Chicago, Illinois and has an inner tube having a diameter of 3.0″ (75mm) and a concentric outer tube having a diameter of 4.0″ - (100mm). Water preheated to a temperature of 195°F (90°C) passes through the inner tube and carries the extruded surimi product through the heat exchanger. The length of the inner tube of the heat smaller inner tube and the larger outer tube, water at a temperature of 200°F (93°C) is provided to maintain the temperature of the water that is carrying the extruded surimi product in the inner tube. The residence time of a piece of the formed product in the heat exchanger is 2.0 minutes. The temperature of the product leaving the heat exchanger is 175°F (79°C).

The cooked product is then removed from the hot water bath and deposited onto a perforated belt where excess water is allowed to drain off. Cool refrigerated air is circulated across and through the belt in order to increase the cooling and dewatering rate. After the product is cooled to a temperature of 60°F (15°C) it is a vacuum packed by conventional techniques and placed in cold storage prior to distribution. About 40.0 minutes elapse between the point where the comminuted frozen slabs of surimi are introduced into the initial pump and the point where the cooked and extruded product are ready for packaging.

The example illustrates the ability of a method carried out in accordance with the present invention to provide an extruded style chunk imitation crabmeat product by a process that involves a minimal number of steps. Although the example illustrates a process carried out in accordance with the present invention that uses a batch of 500 pounds (227kg) of frozen surimi as the starting material it should be understood that by continuously supplying frozen surimi to the silent cutter, the process can be carried out on a continuous basis.

The present invention has been described in relation to preferred embodiments. One of ordinary skill after reading the foregoing specification, will be able to affect various changes, substitutions of equivalents, and other alterations without departing from the broad concepts disclosed herein. The skilled artisan will appreciate that a process carried out in accordance with the present invention must be carried out under conditions that insure safety by reducing the sources of potential contamination. it is therefore intended that the scope of Letters Patent granted herein will be limited only by the definition contained in the appended claims and equivalents thereof.

## Claims

1. A process for providing preformed filaments of ground surimi for molding into an imitation crabmeat product, the process comprising the steps:

(a) forming a thin sheet comprising ground surimi, the ground surimi having a paste-like consistency;

(b) setting the ground surimi in the thin sheet;

(c) introducing slits into the sheet of ground surimi, the slits passing at least partially through the sheet of ground surimi;

(d) separating the slit sheet of ground surimi along the slits to provide a plurality of individual filaments of ground surimi; and

(e) mixing the individual filaments with a binder material.

2. A process as claimed in Claim 1 further comprising a rolling and a cutting step between said slitting step (c) and said separating step (d), said rolling step comprising forming a rope from the slit sheet of ground surimi, said cutting step comprising cutting said rope formed from the slit sheet of ground surimi into predetermined lengths.

3. A process as claimed in Claim 1 or Claim 2, wherein said binder material includes the ground surimi used to form the thin sheets of ground surimi in step (a).

4. A process as claimed in any of Claims 1-3 further comprising the steps of:

(f) forming the mixture of individual filaments and the binder material into a predetermined shape; and

(g) setting the binder material.

5. A process as claimed in Claim 4 wherein said moulding step (f) further comprises adding color to the mixture of individual filaments and binder material.

6. A process as claimed in Claim 4 or Claim 5, wherein said setting step (g) comprises heat setting the binder material in the molded mixture of individual filaments and binder material by depositing the molded mixture through a hot water bath for a predetermined period of time.

7. A process as claimed in Claim 6, wherein the hot water bath includes a recirculating stream of water passing through a heat exchanger.

8. A process as claimed in any preceding Claim, wherein the thin sheet comprising ground surimi has a thickness ranging between about 1/32" - (0.5mm) to about 1/8" (3.2mm).

9. A process as claimed in any preceding claim, wherein the forming step (a) supplies a continuous length of the thin sheet comprising ground surimi to a coagulating step (b).

10. A process as claimed in any preceding claim, wherein the thin sheet comprising ground surimi has a length of at least three feet (900mm).

11. A process as claimed in any preceding Claim, wherein the slits introduced in step (d) pass completely through said thin sheet comprising ground surimi.

12. A process as claimed in any of Claims 1-11, wherein the thin sheet is cooled after it is set.

170

170

170

*Fig. 3.*

PRIOR ART

170

170

180

*Fig. 4.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 6, no. 223 (C-133)[1101], 9th November 1982; & JP-A-57 125 678 (SUISANCHIYOU) 05-08-1982 * Abstract * | 1 | A 23 L 1/325 |
| A | FOOD TECHNOLOGY, vol. 38, no. 11, 1984, pages 69-80, Chicago, US; C.M. LEE: "Surimi process technology" * Page 76, column 2, paragraph 7; page 77, column 1, paragraphs 1-3 * | 1-2 | |

TECHNICAL FIELDS
SEARCHED (Int. Cl.5)

A 23 L

The present search report has been drawn up for all claims

| Place of search | Date of completion of search | Examiner |
|---|---|---|
| The Hague | 07 December 90 | SANTOS Y DIAZ A.I. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document